# FASCICULE DE BREVET EUROPEEN

(11) **EP 3 145 661 B1**
(45) Date de publication et mention de la délivrance du brevet: **29.08.2018**
(21) Numéro de dépôt: 15732049.0
(22) Date de dépôt: 19.05.2015
(51) Int. Cl.: B01D 21/00, B22F 9/24, B22F 1/00, B82Y 30/00

(54) **PROCEDE DE PURIFICATION DE NANOFILS METALLIQUES.**
VERFAHREN ZUR REINIGUNG VON METALLNANODRÄHTEN
PROCESS FOR PURIFYING METAL NANOWIRES

(30) Priorité: 20.05.2014 FR 1454515
(43) Date de publication de la demande: 29.03.2017
(73) Titulaire: Commissariat à l'Énergie Atomique et aux Énergies Alternatives, 75015 Paris (FR)
(72) Inventeur: SIMONATO, Jean-Pierre, F-38360 Sassenage (FR); CELLE, Caroline, F-42700 Firminy (FR); LESCOUET, Tristan, 89300 SAINT AUBIN SUR YVONNE (FR); MAYOUSSE, Céline, 44100 NANTES (FR)
(74) Mandataire: Nony
(86) Numéro de dépôt international: PCT/IB2015/053672
(87) Numéro de publication internationale: WO 2015/177717

(56) Documents cités:
- DE-A1-102010 017 706
- US-A1- 2011 070 404
- CÉLINE MAYOUSSE ET AL: "Paper;Improvements in purification of silver nanowires by decantation and fabrication of flexible transparent electrodes. Application to capacitive touch sensors;Improvements in purification of silver nanowires by decantation and fabrication of flexible transparent electrodes. Application to capacit", NANOTECHNOLOGY, IOP, BRISTOL, GB, vol. 24, no. 21, 25 avril 2013 (2013-04-25), page 215501, XP020244914, ISSN: 0957-4484, DOI: 10.1088/0957-4484/24/21/215501 cité dans la demande

## Description

La présente invention se rapporte à un nouveau procédé de purification des nanofils métalliques par séparation des différents sous-produits contenus dans le mélange réactionnel après synthèse des nanofils.

Les nanofils métalliques trouvent une application particulièrement intéressante dans la fabrication de matériaux conducteurs électriques et transparents, en particulier d'électrodes transparentes, notamment pour des dispositifs optoélectroniques (dispositifs photovoltaïques, OPDs (« Organic Photo Detectors » en langue anglaise), écrans, etc.), ou des films chauffants transparents.

Les récentes avancées dans le domaine des nanotechnologies ont montré que les nanofils métalliques, par exemple les nanofils d'argent, constituent une alternative particulièrement avantageuse aux films à base d'oxydes conducteurs transparents (connus sous l'abréviation « TCOs » pour « Transparent conductive oxides » en langue anglaise), par exemple à base d'oxyde d'étain et d'indium, traditionnellement utilisés pour la réalisation d'électrodes transparentes.

Le système conducteur et transparent est alors obtenu en formant, à partir d'une suspension de nanofils dans un solvant (par exemple, dans l'eau, le méthanol, l'isopropanol, etc.), un réseau percolant de nanofils métalliques sur une surface, par exemple en verre. De nombreux avantages sont associés à ce procédé de fabrication : bas coût, flexibilité des électrodes obtenues, processabilité par voie humide et à basse température, etc., comme décrit dans la publication Langley *et al.* [1].

Les nanofils métalliques sont généralement produits, de manière aisée et en grandes quantités, par synthèse chimique en solution, *via* la réduction de sels métalliques, par exemple du nitrate d'argent pour l'obtention de nanofils d'argent, par un polyol, généralement l'éthylène glycol.

Malheureusement, cette synthèse n'est pas une réaction sélective, et des impuretés sont produites pendant la synthèse, en particulier des petites nanoparticules, des agrégats (nanoparticules agglomérés) et des grosses particules, par exemple de type bâtonnet. Or, ces coproduits sont susceptibles d'impacter négativement les performances des électrodes (baisse de la transmittance à conductivité identique, forte rugosité, etc.).

Par conséquent, il convient d'éliminer ces différents sous-produits de la réaction de synthèse des nanofils, afin d'optimiser les performances des électrodes et faciliter leur intégration, en particulier dans des structures comportant d'autres couches en interaction directe avec les électrodes.

Malheureusement, la technique de purification des nanofils, communément mise en oeuvre, qui consiste en une succession d'étapes de centrifugation, est longue, fastidieuse et difficilement reproductible.

Des méthodes alternatives de purification des nanofils ont déjà été proposées. Par exemple, la demande US 2011/0045272 décrit un procédé pour isoler des nanofils métalliques, par précipitation des nanostructures de facteur de forme supérieur à 10, à partir d'un mélange ternaire formé en combinant le mélange réactionnel comprenant les nanofils en suspension dans un solvant polyol, avec de l'eau et une cétone.

On peut également citer Mayousse *et al.* [2] qui proposent de laisser décanter le mélange réactionnel après synthèse des nanofils d'argent pendant plusieurs jours. Cette décantation permet de séparer les nanoparticules qui se retrouvent dans la phase surnageante, des nanofils présents dans le précipité. Si ce procédé permet de s'affranchir des nanoparticules, les agrégats et autres particules de taille élevée se retrouvent, conjointement aux nanofils, dans le précipité, et ne sont donc pas séparés des nanofils métalliques.

La présente invention vise à proposer une nouvelle méthode de séparation des nanofils métalliques des particules inorganiques annexes (nanoparticules, agrégats, grosses particules, par exemple de type bâtonnet) présentes dans le mélange réactionnel après synthèse des nanofils.

Plus précisément, la présente invention concerne un procédé utile pour isoler des nanofils métalliques de leur mélange réactionnel de synthèse contenant en outre des particules inorganiques annexes distinctes des nanofils, comprenant au moins les étapes consistant en :
(i) disposer d'un mélange de nanofils métalliques avec des grosses particules présentant au moins deux dimensions supérieures ou égales à 250 nm, et des petites particules de plus grande dimension strictement inférieure à 200 nm, à l'état de dispersion dans un milieu solvant S1 de viscosité à 25 °C supérieure ou égale à 10 mPa.s ;
(ii) laisser ledit mélange décanter dans des conditions propices à la formation d'une phase surnageante comprenant lesdites petites particules et d'un précipité comprenant les nanofils métalliques et lesdites grosses particules ;
(iii) isoler le précipité obtenu à l'issue de la décantation (ii), et le disperser dans un milieu solvant S2 de viscosité à 25 °C strictement inférieure à 10 mPa.s ;
(iv) laisser la suspension formée en étape (iii) décanter dans des conditions propices à la précipitation desdites grosses particules ; et
(v) récupérer les nanofils à l'état de dispersion dans la phase surnageante obtenue à l'issue de la décantation (iv).

On désignera plus simplement dans la suite du texte, par « grosses particules », les particules présentant au moins deux dimensions supérieures ou égales à 250 nm, et par « petites particules », les particules de plus grande dimension strictement inférieure à 200 nm.

On entend par « dimensions » d'une particule, la taille de la particule mesurée selon les différents axes (x), (y) et (z) d'un repère orthogonal. Par exemple, dans le cas d'une particule de type bâtonnet (« rod » en langue anglaise), les dimensions de la particule peuvent être son diamètre et sa longueur. Dans le cas d'une particule de forme sphérique, les dimensions mesurées suivant chacun des axes (x), (y) et (z) sont identiques et correspondent au diamètre de la particule.

La taille des particules est mesurée par microscopie électronique en transmission (TEM), par microscopie électronique à balayage (MEB) ou par microscopie à force atomique (AFM).

Les différentes particules inorganiques annexes, distinctes des nanofils, sont décrites plus précisément dans la suite du texte.

De manière surprenante, les inventeurs ont découvert qu'il est possible, en associant deux étapes spécifiques de décantation, de séparer les nanofils, à la fois des petites particules et des grosses particules, coproduites lors de la synthèse des nanofils métalliques.

Le procédé de l'invention s'avère particulièrement avantageux à plusieurs titres.

Tout d'abord, comme illustré dans l'exemple qui suit, il permet d'obtenir une solution de nanofils métalliques, débarrassée de la majorité, voire de la totalité, des sous-produits inorganiques générés lors de la synthèse des nanofils métalliques.

Par ailleurs, le procédé de purification des nanofils selon l'invention, basé sur une double décantation, est particulièrement aisé et peu coûteux à mettre en oeuvre. Il permet avantageusement de s'affranchir de la technique classique, longue et coûteuse, de purification par centrifugations. Qui plus est, le procédé de l'invention conduit à un meilleur résultat de purification, comparativement au procédé classique de purification par centrifugations.

Egalement, le procédé de l'invention permet avantageusement de s'affranchir du solvant de réaction, mis en oeuvre pour la synthèse des nanofils, classiquement l'éthylène glycol, difficile à manipuler du fait de sa forte viscosité et de son point d'ébullition élevé. En effet, comme détaillé dans la suite du texte, à l'issue de la première décantation selon le procédé de l'invention, la phase surnageante, contenant essentiellement les petites particules en suspension dans le solvant de réaction, est éliminée, tandis que le précipité contenant les nanofils métalliques est récupéré.

A l'issue de la seconde décantation du procédé de l'invention, les nanofils sont ainsi récupérés dans un solvant, distinct du solvant de réaction, par exemple de type monoalcool, de préférence dans le méthanol, l'éthanol ou leur mélange, facile à manipuler, notamment en vue de la mise en oeuvre ultérieure des nanofils ainsi purifiés pour la préparation d'électrodes.

Enfin, le procédé de l'invention permet de récupérer une quantité satisfaisante des nanofils initialement présents dans le mélange réactionnel de départ, en particulier plus de 50 %, avantageusement plus de 60 %, et plus particulièrement plus de 75 %, des nanofils métalliques initialement présents dans le mélange réactionnel.

D'autres caractéristiques, variantes et avantages du procédé selon l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### MELANGE DES NANOFILS METALLIQUES ET DES PARTICULES INORGANIQUES ANNEXES

Comme évoqué précédemment, une première étape du procédé de l'invention consiste à disposer d'un mélange de nanofils métalliques avec des particules inorganiques annexes, distinctes des nanofils, dans un milieu solvant de viscosité à 25 °C supérieure ou égale à 10 mPa.s.

En particulier, un tel mélange peut être le mélange réactionnel, obtenu à l'issue d'une synthèse classique des nanofils.

Les protocoles de synthèse des nanofils métalliques sont bien connus de l'homme du métier. D'une manière générale, ils mettent en oeuvre la réduction de sels métalliques, par exemple du nitrate d'argent pour la synthèse de nanofils d'argent, par un polyol, typiquement l'éthylène glycol, en présence d'un agent de nucléation (généralement NaCl) et de polyvinylpyrrolidone (PVP), comme décrit dans la publication Langley *et al.* [1]. La PVP joue le rôle d'agent de blocage, capable de contrôler les vitesses de croissance des différentes surfaces des nanocristaux d'argent.

Par « milieu solvant », on entend désigner un unique solvant, ou un mélange d'au moins deux solvants.

De préférence, le milieu solvant du mélange initial dans lequel sont dispersés les nanofils métalliques et particules inorganiques annexes, nommé milieu solvant « S1 », est formé d'un unique solvant.

Selon un mode de réalisation particulièrement préféré, le milieu solvant S1 est formé du solvant réactionnel qui a été mis en oeuvre pour la synthèse des nanofils métalliques, classiquement l'éthylène glycol.

Selon une autre variante de réalisation, le milieu solvant S1 peut également être formé du solvant réactionnel, auquel ont été ajoutés un ou plusieurs solvants, de préférence un (des) monoalcool(s). En particulier, le mélange en étape (i) peut être formé à partir du mélange réactionnel, directement obtenu à l'issue de la synthèse des nanofils, auquel a été ajouté, à des fins de dilution, un volume additionnel de solvant.

Selon encore une autre variante de réalisation, le milieu solvant S1 du mélange en étape (i) peut être formé d'un ou plusieurs solvants différents du solvant réactionnel utilisé pour la synthèse des nanofils. Le mélange en étape (i) peut par exemple être obtenu, préalablement à la mise en oeuvre du procédé de l'invention, à partir du mélange réactionnel de synthèse, après séparation du solvant réactionnel, et ajout d'un ou plusieurs solvants de nature distincte.

Le milieu solvant S1 du mélange en étape (i) est caractérisé par une viscosité, à 25 °C, supérieure ou égale à 10 mPa.s.

De préférence, le milieu solvant S1 présente une viscosité à 25 °C comprise entre 10 et 50 mPa.s.

La viscosité peut être mesurée par toute méthode classique connue de l'homme du métier, par exemple à l'aide d'un viscosimètre à rotation, à corps vibrant ou à tube capillaire.

Selon un mode de réalisation particulier, le milieu solvant S1 comprend, en particulier est formé, d'un ou plusieurs solvants choisis parmi les polyols ayant de 2 à 6 atomes de carbone, de préférence les diols ayant de 2 à 4 atomes de carbone, en particulier choisis parmi l'éthylène glycol et le propylène glycol.

Selon un mode de réalisation particulièrement préféré, le milieu solvant S1 est le propylène glycol ou l'éthylène glycol, de préférence l'éthylène glycol.

De préférence, le milieu solvant S1 est dénué de cétone. En particulier, il ne comprend pas d'acétone.

### Nanofils métalliques

Les nanofils métalliques sont, d'une manière générale, des structures présentant un diamètre de l'ordre de quelques dizaines de nanomètres et une longueur de plusieurs micromètres.

En particulier, les nanofils métalliques présentent un diamètre allant de 20 à 200 nm, de préférence de 20 à 100 nm, et plus particulièrement de 30 à 90 nm.

La longueur des nanofils peut être plus particulièrement comprise entre 0,5 µm et 200 µm, en particulier entre 1 µm et 50 µm.

Les dimensions des nanofils peuvent également être exprimées au travers de la donnée de leur facteur de forme (correspondant au rapport longueur sur diamètre). Ainsi, les nanofils métalliques présentent plus particulièrement un facteur de forme compris entre 10 et 1000, en particulier supérieur à 20, de préférence supérieur à 100.

Les nanofils métalliques sont formés d'un matériau métallique, qui peut être choisi parmi les métaux élémentaires, par exemple les métaux de transition, les composés métalliques, tels que les oxydes métalliques. Le matériau métallique peut également être un matériau bimétallique ou un alliage métallique qui comprend au moins deux types de métaux, par exemple le cupronickel (alliage de cuivre et de nickel).

De préférence, les nanofils sont formés d'un ou plusieurs métaux. A titre d'exemple de métal, on peut notamment citer l'argent, l'or, le cuivre, le nickel, l'argent plaqué or, le platine et le palladium.

Selon un mode de réalisation particulièrement préféré, les nanofils métalliques selon l'invention sont des nanofils d'argent.

Selon un mode de réalisation particulier, le mélange de l'étape (i) présente une concentration en matériau métallique constitutif desdits nanofils métalliques comprise entre 0,1 et 10 g/L, en particulier entre 1 et 4 g/L.

Dans le cas de nanofils d'argent, la concentration en argent du mélange en (i) peut ainsi être comprise entre 0,1 et 10 g/L, notamment entre 1 et 4 g/L.

Cette concentration peut être par exemple mesurée par spectrométrie par torche plasma (ICP-MS ou ICP-OES) ou absorption atomique.

Bien entendu, l'homme du métier est à même d'adapter la concentration en matériau métallique du mélange de départ par ajout, en quantité adéquate, d'un ou plusieurs solvants.

### Particules inorganiques annexes

Comme évoqué précédemment, les nanofils métalliques sont obtenus, après une synthèse classique, en mélange avec d'autres particules inorganiques annexes.

En particulier, le mélange en étape (i) comprend, outre les nanofils métalliques, des particules, dites « grosses particules », présentant au moins deux dimensions supérieures ou égales à 250 nm, et des particules, dites « petites particules », de plus grande dimension strictement inférieure à 200 nm.

Ces différentes particules, coproduites pendant la synthèse des nanofils, peuvent être de morphologie sphérique ou anisotrope.

Les grosses particules peuvent plus particulièrement présenter au moins deux dimensions comprises entre 250 et 5000 nm.

Il peut s'agir d'agrégats, formés de particules agglomérées entre elles, ou de particules individuelles de grande dimension, par exemple de particules fortement anisotropiques tels que des bâtonnets.

Les bâtonnets peuvent par exemple présenter un diamètre supérieur ou égal à 250 nm et un facteur de forme (ratio longueur/diamètre) typiquement compris entre 5 et 30.

La plus grande dimension des petites particules présentes dans le mélange en étape (i) peut être plus particulièrement comprise entre 1 et 100 nm.

Les petites particules sont plus particulièrement des particules globalement sphériques de diamètre compris entre 20 et 80 nm.

Selon un mode de réalisation particulier, les nanofils métalliques et les particules inorganiques annexes (petites et grosses particules) sont présents dans le mélange en étape (i) dans un rapport massique nanofils/particules annexes compris entre 70/30 et 99/1.

### PREMIERE DECANTATION

Comme précisé précédemment, dans une deuxième étape (ii) du procédé de l'invention, le mélange de l'étape (i) est laissé à décanter.

Cette première décantation permet de séparer les petites particules telles que décrites précédemment, des nanofils et grosses particules présents dans le mélange.

Plus précisément, cette première décantation conduit à un surnageant comprenant lesdites petites particules dispersées dans le milieu solvant S1, tandis que le précipité (encore appelé « dépôt »), résultant de la décantation, comprend les nanofils et grosses particules.

Il appartient à l'homme du métier d'ajuster les conditions opératoires de la décantation, notamment en termes de durée, pour obtenir la séparation souhaitée, en particulier au regard de la nature du milieu solvant S1 du mélange initial.

La décantation peut être opérée à température ambiante.

D'une manière générale, la décantation en étape (ii) est opérée pendant une durée allant de 6 heures à 7 jours, en particulier de 12 heures à 5 jours, et plus particulièrement de 12 heures à 3 jours.

Dans le cas où le milieu solvant S1 est l'éthylène glycol, le mélange peut être plus particulièrement laissé à décanter pendant une durée allant de 6 heures à 7 jours, en particulier de 12 heures à 3 jours, et plus particulièrement de 12 heures à 48 heures.

Bien entendu, la durée de cette première décantation peut être réduite, au détriment toutefois de la qualité de la séparation. Il est entendu qu'une trop faible durée de décantation peut conduire à une perte d'une quantité importante de nanofils qui ne serait pas décantée.

Dans une étape (iii) du procédé selon l'invention, le précipité obtenu à l'issue de cette première décantation, comprenant la majorité des nanofils métalliques initialement présents dans le mélange (i), est récupéré, par exemple en éliminant au moyen d'un système de succion comme une pipette la phase surnageante.

La phase surnageante éliminée peut être traitée séparément pour récupérer les matières premières, en particulier le recyclage du matériau métallique, tel que l'argent.

Le produit décanté, isolé à l'issue de la première décantation, est ensuite dispersé dans un milieu solvant, dit milieu solvant « S2 », de viscosité à 25 °C strictement inférieure à 10 mPa.s..

Le milieu solvant S2 est de préférence ajouté en un volume tel que la suspension ainsi formée présente une concentration en matériau métallique formant les nanofils métalliques, par exemple en argent dans le cas de nanofils d'argent, comprise entre 0,1 et 10 g/L, en particulier entre 0,1 et 4 g/L.

L'homme du métier est bien entendu à même d'adapter le volume de milieu solvant S2 mis en oeuvre pour obtenir la concentration souhaitée.

Le milieu solvant S2 présente de préférence une viscosité à 25 °C inférieure ou égale à 5 mPa.s, en particulier inférieure ou égale à 3 mPa.s, plus particulièrement inférieure ou égale à 2 mPa.s et notamment allant de 0,1 à 1 mPa.s.

A l'image du milieu solvant S1, le milieu solvant S2 peut être formé d'un unique solvant ou un mélange d'au moins deux solvants. De préférence, il est formé d'un unique solvant.

Selon un mode de réalisation particulier, le milieu solvant S2 comprend, en particulier est formé, d'un ou plusieurs solvants choisis parmi les monoalcools ayant de 1 à 6 atomes de carbone et l'eau.

De préférence, le milieu solvant S2 est formé d'un ou plusieurs solvants choisis parmi le méthanol, l'éthanol et le propanol.

Selon un mode de réalisation particulièrement préféré, le milieu solvant S2 est le méthanol.

De préférence, le milieu solvant S2 est dénué de cétone. En particulier, il ne comprend pas d'acétone.

### DEUXIEME DECANTATION

Selon l'étape (iv) du procédé de l'invention, la suspension, ainsi formée en étape (iii) dans le milieu solvant S2, est laissée à décanter.

Cette seconde décantation permet de séparer les nanofils des grosses particules. Plus précisément, cette seconde décantation conduit à une phase surnageante comprenant lesdits nanofils métalliques dans le milieu solvant S2 et dénuée de grosses particules.

Les grosses particules (ainsi qu'une faible partie des nanofils) sont récupérées dans le précipité.

De même que pour la première décantation, il appartient à l'homme du métier d'ajuster les conditions opératoires de cette seconde décantation, notamment en termes de durée, pour obtenir la séparation souhaitée, notamment au regard de la nature du milieu solvant S2 de la suspension de départ,

La décantation peut être opérée à température ambiante.

La durée de cette seconde décantation est, d'une manière générale, plus faible que la durée de la première décantation (étape (ii)) du procédé de l'invention.

Cette seconde décantation peut être opérée pendant une durée allant de 1 heure à 4 jours, en particulier de 6 heures à 24 heures et plus particulièrement de 10 à 20 heures.

Bien entendu, la durée de cette seconde décantation peut être réduite au détriment de la qualité de la séparation, suivant la quantité de sous-produits admissible dans la solution finale de nanofils.

A l'issue de cette seconde étape de décantation, la phase surnageante comprenant les nanofils dispersés dans le milieu solvant S2 est isolée du précipité.

Quant au précipité, il peut être traité séparément pour une récupération des matières premières, en particulier un recyclage du matériau métallique, tel que l'argent.

Il est entendu qu'une partie des nanofils du mélange initial peut être éliminée lors des différentes étapes du procédé de l'invention, notamment lorsque l'objectif principal est d'obtenir une solution finale de nanofils, totalement dénuée de particules inorganiques annexes.

En particulier, la phase surnageante récupérée en étape (v) comprend plus de 50 %, en particulier plus de 60 % et plus particulièrement plus de 75 %, des nanofils initialement présents dans le mélange de l'étape (i).

Selon un mode de réalisation particulier, le procédé de l'invention peut en outre comprendre une ou plusieurs étapes ultérieures (vi) de lavage de la phase surnageante récupérée en étape (v), pour éliminer les résidus organiques, par exemple les traces de PVP utilisée lors de la synthèse des nanofils.

Les méthodes de lavage sont bien connues de l'homme du métier, et déjà mises en oeuvre après la méthode traditionnelle de purification par centrifugations.

La phase surnageante peut être par exemple lavée à l'acétone et/ou au méthanol.

Selon un autre mode de réalisation particulier, les nanofils peuvent être récupérés sous forme sèche, après élimination du milieu solvant S2.

En vue de leur utilisation pour la fabrication d'un matériau électrique et transparent, ils peuvent être redispersés, par exemple dans l'eau ou le méthanol, à la concentration souhaitée (typiquement, une concentration en matériau métallique comprise entre 50 et 1000 mg/L).

Les nanofils purifiés à l'issue du procédé de l'invention, en suspension dans le milieu solvant S2, ou redispersés dans un solvant tel que l'eau ou le méthanol, peuvent être utilisés pour la fabrication de matériaux conducteurs électriques et transparents, par exemple une électrode transparente.

Les méthodes de fabrications de tels matériaux conducteurs électriques et transparents sont connues de l'homme du métier.

Par exemple, un réseau percolant de nanofils peut être déposé en surface d'un substrat, par exemple en verre, à partir de la suspension de nanofils, par exemple par nébulisation, vaporisation, dépôt à la tournette, enduction, sérigraphie, etc., de préférence par pulvérisation (ou « spray coating » en langue anglaise).

Selon encore un autre mode de réalisation particulier, les nanofils peuvent être soumis à un traitement acide, *via* (a) la mise en contact des nanofils métalliques (en dispersion dans le surnageant ou redispersés dans un solvant tel que l'eau ou le méthanol) avec une solution d'un acide, cette solution ayant un pH inférieur à 7, de préférence inférieur à 3, suivie de (b) l'élimination de l'acide.

Ce traitement acide peut être opéré sur les nanofils métalliques avant la fabrication du matériau électrique et transparent, ou une fois le matériau électrique et transparent fabriqué. Un tel traitement est décrit plus en détail dans le document FR 2 991 342.

Ce traitement acide permet avantageusement d'améliorer les performances électriques et optiques du matériau conducteur électrique et transparent formé à partir des nanofils métalliques.

L'invention va maintenant être décrite au moyen de l'exemple suivant, donné à titre illustratif et non limitatif de l'invention.

### EXEMPLE

### Synthèse de nanofils d'argent

Les nanofils d'argent sont synthétisés dans l'éthylène glycol, à partir de nitrate d'argent (AgNO₃), de polyvinyl pyrrolidone (PVP) et de chlorure de sodium (NaCl), selon le protocole de synthèse décrit dans la publication Mayousse *et al.* [2].

Les nanofils, obtenus dans l'éthylène glycol, sont de diamètre compris entre 40 et 80 nm, et de longueur comprise entre 2 et 25 µm (moyenne de 10 µm).

L'observation de la solution au microscope électronique montre la présence, en plus des nanofils d'argent, de petites nanoparticules et grosses particules (bâtonnets, agrégats, grosses nanoparticules).

### 1^{ère} décantation

Le mélange réactionnel, refroidi après synthèse des nanofils, est réparti dans trois cristallisoirs de 6,5 cm de diamètre. Le liquide est présent sur une hauteur de 2 cm. Le mélange est laissé à décanter pendant 2 à 3 jours.

Après cette première décantation, le surnageant est retiré précautionneusement à la pipette. Un solide gris tapisse le fond des cristallisoirs.

Le surnageant contenant essentiellement des nanoparticules de taille strictement inférieure à 200 nm, est mis de côté pour récupération des matières premières.

### 2^{ème} décantation

Le solide décanté est récupéré avec du méthanol (200 mL au total).

Une observation de la suspension ainsi formée au microscope électronique montre l'absence des nanoparticules qui étaient initialement présentes dans le mélange réactionnel de départ, et la présence des nanofils, bâtonnets, agrégats et grosses particules de diamètre supérieur à 250 nm.

La suspension est ensuite répartie dans trois cristallisoirs (de 6,5 cm de diamètre), et mise à décanter.

Après 15 heures de décantation, le surnageant contenant les nanofils est récupéré précautionneusement à la pipette, et le culot décanté est mis de côté pour récupération des matières premières.

Le surnageant récupéré est soumis à deux lavages à l'acétone et au méthanol pour retirer les traces de résidus organiques présents dans le surnageant.

L'observation, au microscope électronique, de la phase surnageante montre qu'elle contient maintenant uniquement des nanofils.

Un traitement acide des nanofils obtenus, tel que décrit dans la demande FR 2 991 342, peut être ensuite réalisé.

Les nanofils ainsi purifiés sont alors utilisables pour la fabrication d'électrodes.

### Références :

[1] Langley et al., "Flexible transparent conductive materials based on silver nanowire networks : a review", Nanotechnology 24 (2013) 452001 (20pp) ;
[2] Mayousse et al., "Improvements in purification of silver nanowires by décantation and fabrication of flexible transparent electrodes. Application to capacitive touch sensors", Nanotechnology 24 (2013) 215501 (6pp).

## Revendications

1. Procédé utile pour isoler des nanofils métalliques de leur mélange réactionnel de synthèse contenant en outre des particules inorganiques annexes distinctes des nanofils, comprenant au moins les étapes consistant en :
(i) disposer d'un mélange de nanofils métalliques avec des grosses particules présentant au moins deux dimensions supérieures ou égales à 250 nm, et des petites particules de plus grande dimension strictement inférieure à 200 nm, à l'état de dispersion dans un milieu solvant S1 de viscosité à 25 °C supérieure ou égale à 10 mPa.s ;
(ii) laisser ledit mélange décanter dans des conditions propices à la formation d'une phase surnageante comprenant lesdites petites particules et d'un précipité comprenant les nanofils métalliques et lesdites grosses particules ;
(iii) isoler le précipité obtenu à l'issue de la décantation (ii), et le disperser dans un milieu solvant S2 de viscosité à 25 °C strictement inférieure à 10 mPa.s ;
(iv) laisser la suspension formée en étape (iii) décanter dans des conditions propices à la précipitation desdites grosses particules ; et
(v) récupérer les nanofils à l'état de dispersion dans la phase surnageante obtenue à l'issue de la décantation (iv).

2. Procédé selon la revendication 1, dans lequel lesdits nanofils métalliques sont des nanofils d'argent.

3. Procédé selon la revendication 1 ou 2, dans lequel le mélange de l'étape (i) présente une concentration en matériau métallique formant lesdits nanofils, en particulier en argent dans le cas de nanofils d'argent, comprise entre 0,1 et 10 g/L, en particulier entre 1 et 4 g/L.

4. Procédé selon l'une quelconque des revendications précédentes, dans lequel ledit milieu solvant S1 présente une viscosité à 25 °C comprise entre 10 et 50 mPa.s.

5. Procédé selon l'une quelconque des revendications précédentes, dans lequel ledit milieu solvant S1 est formé d'un ou plusieurs solvants choisis parmi les polyols ayant de 2 à 6 atomes de carbone, en particulier les diols ayant de 2 à 4 atomes de carbone, de préférence est le propylène glycol ou l'éthylène glycol.

6. Procédé selon l'une quelconque des revendications précédentes, dans lequel la décantation en étape (ii) est opérée pendant une durée allant de 6 heures à 7 jours, en particulier de 12 heures à 5 jours, et plus particulièrement de 12 heures à 3 jours.

7. Procédé selon l'une quelconque des revendications précédentes, dans lequel le milieu solvant S2 présente une viscosité à 25 °C inférieure ou égale à 5 mPa.s, en particulier inférieure ou égale à 3 mPa.s, plus particulièrement inférieure ou égale à 2 mPa.s et notamment allant de 0,1 à 1 mPa.s.

8. Procédé selon l'une quelconque des revendications précédentes, dans lequel ledit milieu solvant S2 est formé d'un ou plusieurs solvants choisis parmi les monoalcools ayant de 1 à 6 atomes de carbone et l'eau.

9. Procédé selon l'une quelconque des revendications précédentes, dans lequel ledit milieu solvant S2 est formé d'un ou plusieurs solvants choisis parmi le méthanol, l'éthanol et le propanol, de préférence le milieu solvant S2 est le méthanol.

10. Procédé selon l'une quelconque des revendications précédentes, dans lequel la suspension formée en étape (iii) présente une concentration en matériau métallique formant lesdits nanofils, en particulier en argent dans le cas de nanofils d'argent, comprise entre 0,1 et 10 g/L, en particulier entre 0,1 et 4 g/L.

11. Procédé selon l'une quelconque des revendications précédentes, dans lequel la décantation en étape (iv) est opérée pendant une durée allant de 1 heure à 4 jours, en particulier de 6 heures à 24 heures et plus particulièrement de 10 à 20 heures.

12. Procédé selon l'une quelconque des revendications précédentes, comprenant une ou plusieurs étapes ultérieures (vi) de lavage de la phase surnageante récupérée en étape (v) pour éliminer les résidus organiques, en particulier de lavage à l'acétone et/ou au méthanol.

## Patentansprüche

1. Verfahren, welches zur Isolierung von Metallnanodrähten gegen ihre Synthesereaktionsmischung dient, die außerdem zusätzliche anorganische Partikel enthält, welche von den Nanodrähten verschieden sind, umfassend mindestens die Schritte bestehend aus:
(i) Bereitstellen einer Mischung von Metallnanodrähten mit groben Partikeln, die mindestens zwei Abmessungen größer oder gleich 250 nm aufweisen, und kleinen Partikeln mit einer größten Abmessung streng kleiner als 200 nm, im Zustand einer Dispersion in einem Lösungsmittelmedium S1 mit einer Viskosität bei 25°C größer oder gleich 10 mPa.s;
(ii) Dekantierenlassen der Mischung unter Bedingungen, die für die Bildung einer Überstandsphase, welche die kleinen Partikel umfasst, und eines Niederschlags, der die Metallnanodrähte und die groben Partikel umfasst, geeignet sind;
(iii) Isolieren des am Ende des Dekantierens (ii) erhaltenen Niederschlags, und Dispergieren desselben in einem Lösungsmittelmedium S2 mit einer Viskosität bei 25°C streng kleiner als 10 mPa.s;
(iv) Dekantierenlassen der in Schritt (iii) gebildeten Suspension unter Bedingungen, die für die Fällung der groben Partikel geeignet sind; und
(v) Gewinnen der Nanodrähte im Zustand einer Dispersion in der Überstandsphase, die am Ende des Dekantierens (iv) erhalten wird.

2. Verfahren nach Anspruch 1,
wobei die Metallnanodrähte Nanodrähte aus Silber sind.

3. Verfahren nach Anspruch 1 oder 2,
wobei die Mischung von Schritt (i) eine Konzentration von Metallmaterial, das die Nanodrähte, insbesondere aus Silber im Fall von Nanodrähten aus Silber, bildet, zwischen 0,1 und 10 g/l, insbesondere zwischen 1 und 4 g/l, aufweist.

4. Verfahren nach einem der vorhergehenden Ansprüche,
wobei das Lösungsmittelmedium S1 eine Viskosität bei 25°C zwischen 10 und 50 mPa.s aufweist.

5. Verfahren nach einem der vorhergehenden Ansprüche,
wobei das Lösungsmittelmedium S1 aus einem oder mehreren Lösungsmitteln gebildet wird, ausgewählt aus Polyolen mit 2 bis 6 Kohlenstoffatomen, insbesondere Diolen mit 2 bis 4 Kohlenstoffatomen, und vorzugsweise Propylenglykol oder Ethylenglykol ist.

6. Verfahren nach einem der vorhergehenden Ansprüche,
wobei das Dekantieren in Schritt (ii) während einer Dauer von 6 Stunden bis 7 Tagen, insbesondere von 12 Stunden bis 5 Tagen, und bevorzugter von 12 Stunden bis 3 Tagen, durchgeführt wird.

7. Verfahren nach einem der vorhergehenden Ansprüche,
wobei das Lösungsmittelmedium S2 eine Viskosität bei 25°C kleiner oder gleich 5 mPa.s, insbesondere kleiner oder gleich 3 mPa.s, bevorzugter kleiner oder gleich 2 mPa.s und besonders von 0,1 bis 1 mPa.s aufweist.

8. Verfahren nach einem der vorhergehenden Ansprüche,
wobei das Lösungsmittelmedium S2 aus einem oder mehreren Lösungsmitteln gebildet wird, ausgewählt aus Monoalkoholen mit 1 bis 6 Kohlenstoffatomen und Wasser.

9. Verfahren nach einem der vorhergehenden Ansprüche,
wobei das Lösungsmittelmedium S2 aus einem oder mehreren Lösungsmitteln gebildet wird, ausgewählt aus Methanol, Ethanol und Propanol, und das Lösungsmittelmedium S2 vorzugsweise Methanol ist.

10. Verfahren nach einem der vorhergehenden Ansprüche,
wobei die in Schritt (iii) gebildete Suspension eine Konzentration von Metallmaterial, das die Nanodrähte, insbesondere aus Silber im Fall von Nanodrähten aus Silber, bildet, zwischen 0,1 und 10 g/l, insbesondere zwischen 0,1 und 4 g/l, aufweist.

11. Verfahren nach einem der vorhergehenden Ansprüche,
wobei das Dekantieren in Schritt (iv) während einer Dauer von 1 Stunde bis 4 Tagen, insbesondere von 6 Stunden bis 24 Stunden und bevorzugter von 10 bis 20 Stunden, durchgeführt wird.

12. Verfahren nach einem der vorhergehenden Ansprüche,
umfassend einen oder mehrere letzte Schritte (vi) des Waschens der Überstandsphase, die in Schritt (v) gewonnen wird, um die organischen Rückstände zu entfernen, insbesondere eines Waschens mit Aceton und/oder Methanol.

## Claims

1. A process useful for isolating metal nanowires from the reaction mixture for the synthesis thereof, also containing ancillary inorganic particles distinct from the nanowires, comprising at least the steps consisting in:
(i) providing a mixture of metal nanowires with large particles having at least two dimensions greater than or equal to 250 nm, and small particles of which the largest dimension is strictly less than 200 nm, in the form of a dispersion in a solvent medium S1 having a viscosity at 25°C greater than or equal to 10 mPa.s;
(ii) leaving said mixture to settle out under conditions conducive to the formation of a supernatent phase comprising said small particles and of a precipitate comprising the metal nanowires and said large particles;
(iii) isolating the precipitate obtained at the end of the settling out (ii), and dispersing it in a solvent medium S2 having a viscosity at 25°C strictly less than 10 mPa.s;
(iv) leaving the suspension formed in step (iii) to settle out under conditions conducive to the precipitation of said large particles; and
(v) recovering the nanowires in the form of a dispersion in the supernatent phase obtained at the end of the settling out (iv).

2. The process as claimed in claim 1, wherein said metal nanowires are silver nanowires.

3. The process as claimed in claim 1 or 2, wherein the mixture of step (i) has a concentration of metallic material forming said nanowires, in particular of silver in the case of silver nanowires, between 0.1 and 10 g/l, in particular between 1 and 4 g/l.

4. The process as claimed in any one of the preceding claims, wherein said solvent medium (S1) has a viscosity at 25°C between 10 and 50 mPa.s.

5. The process as claimed in any one of the preceding claims, wherein said solvent medium S1 is formed from one or more solvents chosen from polyols having from 2 to 6 carbon atoms, in particular diols having from 2 to 4 carbon atoms, preferably is propylene glycol or ethylene glycol.

6. The process as claimed in any one of the preceding claims, wherein the settling out in step (ii) is performed for a duration ranging from 6 hours to 7 days, in particular from 12 hours to 5 days, and more particularly from 12 hours to 3 days.

7. The process as claimed in any one of the preceding claims, wherein the solvent medium S2 has a viscosity at 25°C less than or equal to 5 mPa.s, in particular less than or equal to 3 mPa.s, more particularly less than or equal to 2 mPa.s and in particular ranging from 0.1 to 1 mPa.s.

8. The process as claimed in any one of the preceding claims, wherein said solvent medium S2 is formed from one or more solvents chosen from monoalcohols having from 1 to 6 carbon atoms and water.

9. The process as claimed in any one of the preceding claims, wherein said solvent medium S2 is formed from one or more solvents chosen from methanol, ethanol and propanol, preferably the solvent medium S2 is methanol.

10. The process as claimed in any one of the preceding claims, wherein the suspension formed in step (iii) has a concentration of metallic material forming said nanowires, in particular of silver in the case of silver nanowires, between 0.1 and 10 g/l, in particular between 0.1 and 4 g/l.

11. The process as claimed in any one of the preceding claims, wherein the settling out in step (iv) is performed for a duration ranging from 1 hour to 4 days, in particular from 6 hours to 24 hours and more particularly from 10 to 20 hours.

12. The process as claimed in any one of the preceding claims, comprising one or more subsequent steps (vi) of washing the supernatent phase recovered in step (v) in order to remove the organic residues, in particular of washing with acetone and/or with methanol.
